# EUROPÄISCHE PATENTSCHRIFT

(11) **EP 2 286 183 B1**
(45) Veröffentlichungstag und Bekanntmachung des Hinweises auf die Patenterteilung: **03.07.2013**
(21) Anmeldenummer: 09765432.1
(22) Anmeldetag: 04.06.2009
(51) Int. Cl.: G01C 17/26, H02P 8/22, H02P 8/34, H02P 8/38, G01C 17/36, G01C 19/40, G01P 1/07, G01C 19/36

(54) **VERFAHREN ZUM BETREIBEN EINES MIT WENIGSTENS EINEM SCHRITTMOTOR ANGETRIEBENEN ANZEIGEGERÄTS**
METHOD FOR OPERATING A DISPLAY DEVICE DRIVEN BY AT LEAST ONE STEPPING MOTOR
PROCÉDÉ PERMETTANT DE FAIRE FONCTIONNER UN APPAREIL D'AFFICHAGE ENTRAÎNÉ PAR AU MOINS UN MOTEUR PAS À PAS

(30) Priorität: 19.06.2008 DE 102008028803
(43) Veröffentlichungstag der Anmeldung: 23.02.2011
(73) Patentinhaber: Raytheon Anschütz GmbH, 24106 Kiel (DE)
(72) Erfinder: BEY, Ulf, 24625 Grossharrie (DE); SKERKA, Wolfgang, 24768 Rendsburg (DE)
(74) Vertreter: Lobemeier, Martin Landolf
(86) Internationale Anmeldenummer: PCT/DE2009/000780
(87) Internationale Veröffentlichungsnummer: WO 2009/152796

(56) Entgegenhaltungen:
- EP-A1- 0 666 643
- EP-A2- 0 571 759
- DE-A1- 19 821 835
- GB-A- 2 120 413
- GB-A- 2 239 526
- GB-A- 2 292 026
- US-A- 5 640 075
- US-A- 5 770 937
- US-A- 5 844 393

## Beschreibung

Die Erfindung betrifft ein Verfahren zum Betreiben eines mit wenigstens einem Schrittmotor angetriebenen Anzeigegeräts mit Anzeigeskalen nach dem Oberbegriff des Hauptanspruches, insbesondere eines Ruderlagen- oder Fahrtrichtungsanzeigers eines Schiffes.

Solche direkt angetriebenen Anzeigegeräte, die zudem oft noch eine zweite, zur Feinablesung dienende Kompassrose mit feinerer Teilung aufweisen, werden beispielsweise auf Steuerbrücken bei Schiffen verwandt, siehe z.B. GB 2 239 526 A.

Probleme entstehen bei der Anzeige eines mit wenigstens einem Schrittmotor angetriebenen Anzeigegeräts mit Anzeigeskalen insbesondere bei schnellen Drehungen, die wiederum insbesondere bei schnell fahrenden Schiffen, die innerhalb von wenigen Sekunden Drehrichtungsänderungen vornehmen können, dazu führen, dass stroboskopische Effekte auftreten können, die wiederum bewirken, dass die Skalierung für den Ablesenden verschwimmt und eine eindeutige Kurserkennung nicht möglich ist.

Gerade bei schnellen Drehungen ist jedoch erwünscht, rechtzeitig vor Erreichen des neuen Kurses die Kurserkennung sehr genau durchzuführen, um rechtzeitig ein wenig gegensteuern zu können und bei dem neuen Kurs das Schiff in seiner Drehung "abgefangen" zu haben. Bisherige Anzeigegeräte sind zu sehr auf langsam fahrende Schiffe ausgelegt.

Weiter besteht das Problem, dass durch Step-Verluste bei Schrittmotor-Resonanzen falsche Kursanzeigen entstehen können, die natürlich auf jeden Fall zu vermeiden sind.

Weiter ergeben sich komplexere Anforderungen dadurch, dass üblicherweise zwei Kompassrosen miteinander kombiniert sind, eine, die eine Fein- und eine, die eine Grobteilung enthält.

Erfindungsgemäß wird nun ein Verfahren zum Betreiben eines mit wenigstens einem Schrittmotor angetriebenen Anzeigegeräts angegeben, bei dem die mit Zittereffekten behafteten Stepweiten ausgespart werden und die Schrittmotore jeweils in unproblematischen ohne Zittereffekte erkannten Stepweiten-Bereichen angetrieben werden. Diese Bereiche werden beim Start des Gerätes oder auf Anforderung neu eingemessen, um Temperaturänderungen und Fertigungstoleranzen (heißer Sommertag bis kalte Frostnacht) zu berücksichtigen, die die Resonanz ganz erheblich verschieben können.

Vorteilhafterweise werden zwei Scheiben (Rosen) von zwei Schrittmotoren angetrieben. Der Antrieb erfolgt direkt, ohne Zwischengetriebe. Die Feinrose wird mechanisch in die Grobrose eingebettet, um eine Grob / Fein - Darstellung zu ermöglichen.

Dabei ist jede Rose direkt mit dem Schrittmotor verbunden, wobei die Schrittmotoren so montiert sind, daß die Feinrosenachse durch die Hohlachse der Grobrose führt oder die Grobrosenachse durch die Hohlachse der Feinrose.

Da es Ziel ist, in der Darstellung der Winkelwerte durch die Rosen in der Bewegung keine stroboskopischen Effekte auftreten zu lassen, da sonst die Skalierung verschwimmt und eine eindeutige Kurserkennung nicht möglich ist, wird nun ein Betrieb der Rosen mit nur solchen Stepweiten - z.B. ein sechsmal größerer Step als es die feinste Auflösung zulässt - zugelassen, die keine Resonanzen verursachen. Auch Step - Verluste sind zu vermeiden, die bei Schrittmotorresonanzen bisher häufig die Folge waren, und mit der Zeit Abweichungen von dem gewünschten Anzeigewert ergeben, die natürlich deshalb zu vermeiden sind, weil eine falsche Kursanzeige zu falschen Kursen des Schiffes - jedenfalls kurzfristig führen kann - was schwerwiegende Folgen haben kann.

Zur Ermittlung einer geeigneten Kompensation werden drehbewegungsabhängige Ansteuersequenzen vorgeschlagen, die während der Startpositionierung der beiden Rosen "Fein" und "Grob" erstellt werden.

Das vorgeschlagene Verfahren zum Ansteuern eines Schrittmotors für ein mit wenigstens einem Schrittmotor direktangetriebenen Anzeigegerät mit sich drehenden Anzeigeskalen, wird dann zunächst zur Ermittlung der problematischen Bereiche der mit unterschiedlichen Stepweiten betriebenen Schrittmotore ein Meßlauf durchgeführt wird, indem ein Schrittmotor mit einer definierten vorbestimmten Stepweite angesteuert und ein an der Anzeigerose vorgesehener Meßpunkt durch einen Sensor neben der Anzeigerose mit seiner elektrischen Sensorantwort erfaßt wird, die Anzeigerose mit variierenden Stepweiten am Sensor vorbeibewegt wird wobei stets die Sensorantwort des Meßpunktes dabei erfaßt wird, und ein Soll/Ist-Vergleich erfolgt, zur Ermittlung der Stepweiten, bei denen Resonanz herrscht und/oder Schritte ausgelassen werden.

Durch nachfolgendes Betreiben des/der Schrittmotor(s/e) in den so oder ähnlich ermittelten geeigneten Stepweiten wenigstens in problematischen mit Fehlermöglichkeiten behafteten Bereichen bei der Ansteuerung jeweils eines Schrittmotors zum Bewegen der Anzeigeskala, die in Form einer Anpassungsgröße tabellarisch vorliegen, und Betreiben des/der Schrittmotor(s/e) mit geeigneter Stepweitenauflösung in den Bereichen die als zitter- oder fehlerbehaftet identifiziert sind, wird sichergestellt, dass stets eine korrekte 1:1 Beziehung zwischen Anzeige und der physikalischen Größe besteht, die anzuzeigen ist.

Durch den Messlauf werden zudem außer der momentanen Feststellung der kritischen Bereiche auch stets erneut Absolutaussagen über die Stellung der Kompassrosen der Anzeigeskalen gewonnen.

Hauptvorteil jedoch ist, dass einfache Schrittmotore verwandt werden können, die bauartgemäß einen besseren Wirkungsgrad haben, insbesondere weniger Abwärme produzieren. So kann ein um Größenordnungen teurer 5-Phasen-Motor durch einen 2-Phasen-Motor ersetzt werden. Man kann auf aufwändige Getriebe verzichten und erhält auch bei hoher Auflösung eine genaue und stets unverfälschte, klar erkennbare Anzeige.

Der zur Ermittlung der problematischen Stepgrößenbereiche der mit unterschiedlichen Frequenzen betriebenen Schrittmotoren vorgenommene Messlauf wird je einer der Schrittmotore mit einer definierten vorbestimmten Stepgröße aus einem im Betrieb möglichen Spektrum angesteuert und ein an der Anzeigerose vorgesehenen Messpunkt durch einen Sensor neben der Anzeigerose optisch oder induktiv erfasst. Andere Möglichkeiten der Erfassung sind nicht ausgeschlossen.

Die Anzeigerose wird sich also einige Zeit mit variierenden Stepweiten am Sensor vorbeibewegt und die bevorzugt elektrische dabei entstehende Sensorantwort des Messpunktes wird dabei erfasst und tabellarisch protokolliert, woraufhin die Ergebnisse eines Soll/Ist-Vergleichs in der Tabelle zur Kennzeichnung der Stepweiten dienen, bei denen Resonanz herrscht und/oder Schritte ausgelassen werden. Diese werden dann durch einen Anpassungsfaktor belegt, wobei die Korrektur zur Erlangung einer weiteren Stepweite nicht verloren geht, sondern beispielsweise als ein großer Step nachgeholt wird.

Weitere Vorteile und Merkmale ergeben sich aus nachfolgender Beschreibung eines bevorzugten Ausführungsbeispiels anhand der beigefügten Zeichnung. Dabei zeigt:
- die einzige Figur: eine schematische Schnittdarstellung der Vorrichtung mit den beiden Anzeigerosen für die Grob- und Feinanzeige, die übereinander liegen.

Im rechten Bereich ist ein Sensor für einen auf den Scheiben angeordneten Messpunkt dargestellt.

Das erfindungsgemäße Vorgehen zum Betreiben eines mit wenigstens einem Schrittmotor angetriebenen Anzeigegeräts mit Anzeigeskalen, besteht also aus den Schritten Ermitteln geeigneter Stepweiten wenigstens in problematischen mit Fehlermöglichkeiten behafteten Bereichen bei der Ansteuerung jeweils eines Schrittmotors zum Bewegen der Anzeigeskala in einem Meßlauf beim Start des Gerätes oder auf Anforderung, Speichern der ermittelten Stepweiten in Form einer Anpassungsgröße, und Betreiben des/der Schrittmotor(s/e) mit geeigneter Stepweitenauflösung in den Bereichen die als zitter- und somit mit Fehlermöglichkeiten behaftet identifiziert sind.

Zur Ermittlung der problematischen Bereiche wird beim Meßlauf ein Schrittmotor mit einer definierten vorbestimmten Schrittgröße angesteuert und ein an der Anzeigerose vorgesehener Meßpunkt durch einen Sensor neben der Anzeigerose mit seiner Sensorantwort erfaßt, dann die Anzeigerose mit variierenden Frequenzen am Sensor vorbeibewegt und die Sensorantwort des Meßpunktes dabei erfaßt, so dass ein Soll/Ist-Vergleich erfolgen wird, zur Ermittlung der Frequenzen, bei denen Resonanz herrscht und/oder Schritte ausgelassen werden. Diese werden nach dem Messlauf ausgespart.

Dabei wird bevorzugt ein induktiver Abgriff eines Metallplättchens an der Anzeigerose mit Erfassung der jeweils tatsächlichen Schrittbreiten erfolgen.

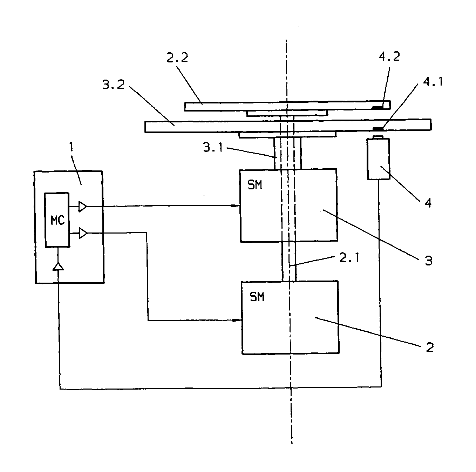

In Fig. 1 ist der resonanz - und stepkompensierte Direktantrieb des Schrittmotor - Systems bestehend aus zwei Schrittmotoren (2 , 3) mit Rosen an den Achsen (2.2, 3.2, 3.3, 2.1), einer Ansteuerelektronik ( 1 ) mit MC und Schrittmotortreibern und einem optisch oder induktiven Sensor (4, 4.1 , 4.2) dargestellt.

Der MC ( 1 ) steuert über die Schrittmotortreiber die Schrittmotoren in Feinstep - Auflösung an (2 , 3). Der optisch/induktive Sensor (4, 4.1, 4.2) erfüllt dabei zwei Aufgaben:
- die Messung der Schrittmotorparameter (Resonanz und Stepgüte) und
- die Abtastung der Startposition.

Zur Messung der Schrittmotorparameter (Resonanz - und Stepgüte) wird alsbald nach dem Anlegen der Betriebsspannung der MC die Grob - Rose (3.2) auf die Sensorposition (4, 4.1) steuern, wobei die Stepgröße der Sensorabdeckung gemessen wird (4 , 4.1).

Diese Messung ist vor jeder Parameterermittlung erforderlich, da die Sensorabtasttoleranz ( 4 ) stark temperaturabhängig ist. Der MC ( 1 ) fährt jetzt im Wechsel von links und rechts über den Sensor ( 4, 4.1 ) und durchläuft in der Ansteuerung eine Frequenz - und Steprampe. Vom MC wird die Reflexion des Sensors ( 4, 4.1 ) ständig gemessen und mit den eingeprägten Ansteuerwerten des Schrittmotors ( 3 ) verglichen.

Die ermittelten Werte werden in einer Sinus/Cosinus Step-Tabelle abgelegt und dienen als aktuelle Ansteuergrößen für den Betrieb des Grob -Schrittmotors ( 3 ).

Das nämliche Verfahren wird auch für die Parameterermittlung des Feinstepmotors (2) genutzt, der dann auch aus einer nur für diesen Schrittmotor ( 2 ) erstellten Sinus/Cosinus Step-Tabelle angesteuert wird.

Dieses Verfahren sollte zur Kompensation nach jedem Einschalten des Systems durchlaufen werden.

Die Abtastung der Startposition erfolgt nach der Parameterermittlung der einzelnen Schrittmotoren (2, 3), wobei die Rosen auf die Nullpunkte der Grad- Darstellung einlaufen, um dann vom MC ( 1 ) auf den aktuellen Kurswert gesteuert zu werden.

Nach dem Start, oder nach Anforderung, durchläuft das Gerät eine Grob-Feinrosen - Ausrichtung auf 0°. Basis dieser Ansteuerung ist eine sinusgewichtete Schrittmotor - Mikrosteptabelle mit einer Stepauflösung von 0.00703°. Das entspricht =51200 Steps für 360°. In dieser Phase werden bei Drehbewegungen der Kompassrosen bis 30°/sek. die Resonanzbereiche ermittelt und eine Stepkorrektur - Tabelle berechnet und bereits in die Ansteuerung einbezogen.

Die Korrekturtabelle ist also kein Umgehen von Resonanzfrequenzen mittels Frequenzausblendung, sondern eine Stepweitenanpassung an die Eigenschaften der Schrittmotoren und Gerätemechanik.

Die hohe Mikrostepauflösung plus der Korrektur, gestattet eine Stepweitenanpassung zur Vermeidung von optisch kritischen Bildfolgen (Darstellung der Grob/Fein Rosen) unter Beibehaltung der Echtzeit-Darstellung der Drehbewegung des Schiffes.

Ein Beispiel:

### A) Ansteuerung ohne Korrektur

alter Istwert in Steps = 12000 = 84.36°

| | |
|---|---|
| alter Stepwert +1Step | = x₁, |
| x₁ + 1 Step | = x₂, |
| x₂ + 1 Step | = x₃, |
| x₃ + 1 Step | = x₄, |
| x₄ + 1 Step | = x₅, |
| x₅ + 1 Step | = x₆, |

Endwert = 84.402°

### B.) Ansteuerung mit Korrektur =6,

alter Istwert in Steps = 12000 = 84.36°

| | |
|---|---|
| alter Stepwert +0 Step | = x₀, |
| x₁ + 0 Step | = x₀, |
| x₂ + 0 Step | = x₀, |
| x₃ + 0 Step | = x₀, |
| x₄ + 0 Step | = x₀, |
| x₅ + 6 Steps | = x₆, |

Endwert = 84.402°

## Patentansprüche

1. Verfahren zum Betreiben eines mit wenigstens einem Schrittmotor (2, 3) angetriebenen Anzeigegeräts mit Anzeigeskalen (2.2, 3.2), **gekennzeichnet durch**
- Ermitteln geeigneter Stepweiten wenigstens in den als mit stroboskopischen Zittereffekten behaftet erkannten Bereichen bei der Ansteuerung jeweils eines Schrittmotors zum Bewegen der Anzeigeskala in einem Meßlauf beim Start des Gerätes oder auf Anforderung,
- Speichern der ermittelten Stepweiten in Form einer Anpassungsgröße, und
- Betreiben des/der Schrittmotor(s/e) (2,3) mit geeigneter Stepweitenauflösung in den Bereichen die als mit den zu vermeidenden Stroboskopzittereffekten behaftet identifiziert sind.

2. Verfahren nach Anspruch 1, **dadurch gekennzeichnet, dass** zur Ermittelung der mit stroboskopischen Zittereffekten behafteten Bereichen der mit unterschiedlichen Stepweiten betriebenen Schrittmotore ein Meßlauf durchgeführt wird, indem :
- ein Schrittmotor mit einer definierten vorbestimmten Stepweite angesteuert und ein an der Anzeigerose vorgesehener Meßpunkt durch einen Sensor neben der Anzeigerose mit seiner elektrischen Sensorantwort erfaßt wird,
- die Anzeigerose mit variierenden Stepweiten am Sensor vorbeibewegt wird wobei stets die Sensorantwort des Meßpunktes dabei erfaßt wird, und
- ein Soll/Ist-Vergleich erfolgt, zur Ermittlung der Stepweiten, bei denen Resonanz herrscht und/oder Schritte ausgelassen werden.

3. Verfahren nach einem der vorhergehenden Ansprüche, **dadurch gekennzeichnet, dass** ein induktiver Abgriff eines Metallplättchens an der Anzeigerose erfolgt.

4. Verfahren nach einem der vorhergehenden Ansprüche, **dadurch gekennzeichnet, dass** zwei Kompassrosen die Anzeigeskalen bilden und die jeweiligen Stepweiten der Schrittmotore für die beiden Kompassrosen zu den tabellarisch ermittelten Werten abgespeichert werden.

## Claims

1. A method for operating a display device driven by at least one stepping motor (2, 3) with display dials (2.2, 3.2), **characterized by**
- determining suitable step widths in at least those regions affected by stroboscopic flicker effects on control of in each case one stepping motor for movement of the display scale in a measuring process on starting up the device or on request,
- storing the determined step widths in the form of a matching parameter and
- operating the stepping motor(s) (2, 3) with a suitable step width resolution in the regions identified as affected by the stroboscopic flicker effects to be avoided.

2. The method according to Claim 1, **characterized in that** for determining those regions affected by stroboscopic flicker effects of the the stepping motors operated with differing step widths, a measurement process is carried out **in that**:
- a stepping motor with a defined predetermined step width is controlled and a measurement point provided on the display dial is detected by a sensor adjacent to the display dial together with its electrical sensor response,
- the display dial is moved past the sensor using varying step widths, the sensor response of the measurement point always being detected in the process, and
- a comparison of desired value/actual value takes place to determine the step widths where resonance occurs and/or steps are omitted.

3. The method according to one of the preceding claims, **characterized in that** an inductive tapping of a metal platelet at the display scale takes place.

4. The method according to one of the preceding claims, **characterized in that** two compass dials form the display dials and the respective step widths of the stepping motors for the two compass dials are stored for the values determined from tables.

## Revendications

1. Procédé permettant de faire fonctionner un appareil d'affichage avec cadrans d'affichage (2.2, 3.2) entraîné par au moins un moteur pas à pas (2, 3), **caractérisé par** la
- détection de largeurs de pas adaptés au moins dans les zones reconnues comme ayant des effets de tremblement stroboscopiques lors du pilotage de respectivement un moteur pas à pas pour déplacer le cadran d'affichage dans une mesure lors du démarrage de appareil ou sur demande,
- enregistrement des largeurs de pas déterminées sous forme d'une grandeur d'adaptation, et
- exploitation du/des moteur(s) pas à pas (2, 3) avec une résolution adaptée des largeurs de pas dans les zones reconnues comme ayant des effets de tremblement stroboscopiques à éviter.

2. Procédé d'après revendication 1, **caractérisé en ce que** pour déterminer les zones reconnues comme ayant des effets de tremblement stroboscopiques des moteurs pas à pas fonctionnant avec différentes largeurs de pas, une mesure est effectuée, en :
- activant un moteur pas à pas avec une certaine largeur de pas prédéfinie et saisissant un point de mesure, prévu sur la rose d'affichage par un capteur parallèlement à la rose d'affichage avec sa réponse de capteur électrique,
- passant la rose d'affichage avec différentes largeurs de pas devant le capteur, étant entendu que qu'on saisit toujours la réponse de capteur du point de mesure à ce moment, et
- une comparaison valeur prescrite/réelle s'effectue, pour déterminer les largeurs de pas, pour lesquelles, il existe la résonance et/ou des pas sont omis.

3. Procédé d'après une de revendications précédentes, **caractérisé en ce qu'**il s'effectue un captage inductif d'une lame de métal sur la rose d'affichage.

4. Procédé d'après une de revendications précédentes, **caractérisé en ce que** deux roses de boussole forment les cadrans d'affichage et que les largeurs de pas respectives des moteurs pas à pas pour les deux roses de boussole sont enregistrées pour les valeurs déterminées sous forme de tableau.
